# EUROPEAN PATENT APPLICATION

(11) **EP 4 414 844 A1**
(43) Date of publication of application: **14.08.2024**
(21) Application number: 22897671.8
(22) Date of filing: 16.11.2022
(51) Int. Cl.: G06F 9/54

(54) **RESOURCE SHARING METHOD, TERMINAL AND COMPUTER READABLE MEDIUM**

(30) Priority: 24.11.2021 CN 202111405213
(71) Applicant: ZTE Corporation, Shenzhen, Guangdong Province 518057 (CN)
(72) Inventor: CAO, Gang, Shenzhen, Guangdong 518057 (CN)
(74) Representative: Canzler & Bergmeier Patentanwälte Partnerschaft mbB
(86) International application number: PCT/CN2022/132224
(87) International publication number: WO 2023/093588

(57) **Abstract**

The present disclosure provides a resource sharing method, including: associating a first kernel interface in a first container with a virtual interface in a second container, with processes in the first container communicating with each other through the first kernel interface; and controlling a process in the second container to call the virtual interface, to enable an application in the second container to access a target process in the first container. The present disclosure further provides a terminal and a computer readable medium.

## Description

### CROSS REFERENCE TO RELATED APPLICATIONS

The present disclosure claims the priority to Chinese Patent Application No. CN202111405213.9 entitled "RESOURCE SHARING METHOD, TERMINAL AND COMPUTER READABLE MEDIUM" and filed on November 24, 2021, the contents of which are incorporated herein by reference in their entirety.

### TECHNICAL FIELD

The present disclosure relates to the field of computer technology, and in particular, to a resource sharing method, a terminal, and a computer readable medium.

### BACKGROUND

An operating system is often designed as running in multiple containers, and the operating system and upper-level applications can run independent of each other in the multiple containers. In order to save system memory and power consumption and increase an operating rate of the system, the multiple containers generally need to share some basic services, thus a container needs to be capable of penetrating another container to access a desired service. However, practicality of inter-container penetration is relatively poor at present.

### SUMMARY

Embodiments of the present disclosure provide a resource sharing method, a terminal, and a computer readable medium.

In a first aspect, an embodiment of the present disclosure provides a resource sharing method, including: associating a first kernel interface in a first container with a virtual interface in a second container, wherein processes in the first container communicate with each other through the first kernel interface; and controlling a process in the second container to call the virtual interface, so as to enable an application in the second container to access a target process in the first container.

In a second aspect, an embodiment of the present disclosure provides a terminal, including: one or more processors; a memory having stored thereon one or more programs which, when executed by the one or more processors, cause the one or more processors to perform the resource sharing method provided in the embodiments of the present disclosure; and one or more input/output (I/O) interfaces connected between the one or more processors and the memory and configured to enable information interaction between the one or more processors and the memory.

In a third aspect, an embodiment of the present disclosure provides a computer readable medium having stored thereon a computer program which, when executed by a processor, implements the resource sharing method provided in the embodiments of the present disclosure.

### BRIEF DESCRIPTION OF DRAWINGS

FIG. 1 is a flowchart of a resource sharing method according to the present disclosure;
FIG. 2 is another flowchart of a resource sharing method according to the present disclosure;
FIG. 3 is another flowchart of a resource sharing method according to the present disclosure;
FIG. 4 is another flowchart of a resource sharing method according to the present disclosure;
FIG. 5 is a flowchart of some operations in a resource sharing method according to the present disclosure;
FIG. 6 is a flowchart of some operations in a resource sharing method according to the present disclosure;
FIG. 7 is another flowchart of a resource sharing method according to the present disclosure;
FIG. 8 is a constituent block diagram of a terminal according to the present disclosure;
FIG. 9 is a constituent block diagram of a computer readable medium according to the present disclosure; and
FIG. 10 is a schematic diagram of architecture for inter-container penetration according to an embodiment of the present disclosure.

### DETAIL DESCRIPTION OF EMBODIMENTS

In order to enable those of ordinary skill in the art to better understand technical solutions of the present disclosure, a resource sharing method, a terminal, and a computer readable medium provided in the present disclosure are described in detail below with reference to the accompanying drawings.

Exemplary embodiments of the present disclosure will be described more fully below with reference to the accompanying drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and features in the embodiments may be combined with each other if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, entireties, steps, operations, elements and/or components, but do not exclude the presence or addition of one or more other features, entireties, steps, operations, elements, components and/or combinations thereof.

Unless otherwise defined, all terms including technical and scientific terms used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In a multi-container Android^{®} system, inter-container penetration is realized mainly through a binder mechanism of the Android^{®} system. A binder is an Inter-Process Communication (IPC) framework provided by the Android^{®} system, and is used for message transmission, synchronization, and memory sharing among a plurality of processes. In the multi-container Android^{®} system, binder service managers (ServiceManagers) of different containers are shared, and an application process in one container accesses a service process in a target container by acquiring ServiceManager of the target container, thus realizing binder-based inter-container penetration.

It is found through research by the applicant of the present disclosure that, in a multi-container operating system, the inter-container penetration cannot be realized if components used for communication between application processes and service processes in a kernel in individual containers are isolated from each other and cannot be accessed by each other. For example, in kernels of Android^{®} systems of some versions, the binder is designed as a file system, and binder file systems of different containers are isolated from each other, such that ServiceManagers cannot be accessed between the containers, resulting in that the inter-container penetration cannot be realized based on the above binder mechanism.

In some related technologies, in order to realize the inter-container penetration in the Android^{®} system, the binder file system is removed to enable the multiple containers to share ServiceManagers, so as to realize the inter-container penetration based on the above binder mechanism. However, removal of the binder file system may affect subsequent compatibility of functions related to the binder file system. Meanwhile, specific request messages of various service processes need to be maintained after the removal of the binder file system, which desires a deep understanding of specific services, and increases difficulty in development and maintenance.

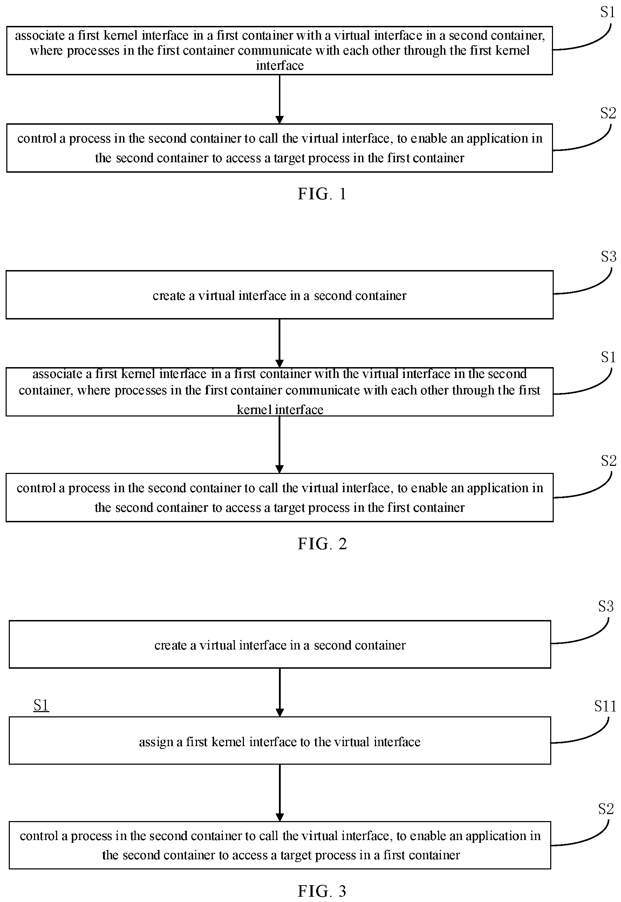

To this end, referring to FIG. 1, an embodiment of the present disclosure provides a resource sharing method, which may include, but is not limited to, the following operations S1 and S2.

At operation S1, a first kernel interface in a first container is associated with a virtual interface in a second container, where processes in the first container communicate with each other through the first kernel interface.

At operation S2, a process in the second container is controlled to call the virtual interface, to enable an application in the second container to access a target process in the first container.

An operating system of the first container and the second container is not particularly limited in the embodiments of the present disclosure. In some embodiments, the operating system of the first container and the second container may be the Android^{®} system.

In the embodiments of the present disclosure, any container includes a file system interface and a kernel interface which are associated with each other, the file system interface is used for a process to access the kernel interface, and the kernel interface is used for communication of different processes in a kernel. By accessing the kernel interface, the process is capable of communicating with a service process in the kernel, so as to enable an application program to call a corresponding service.

It should be noted that, in the embodiments of the present disclosure, the first kernel interface in the first container being associated with the virtual interface in the second container refers to executing a relevant operation which enables a process in the second container to access the first kernel interface in the first container by calling the virtual interface.

How to associate the first kernel interface in the first container with the virtual interface in the second container is not particularly limited in the embodiments of the present disclosure. For example, the virtual interface may be implemented in a form of an object, the first kernel interface may also be implemented in the form of an object, and associating the first kernel interface with the virtual interface refers to associating a virtual interface object with a first kernel interface object, for example, assigning the first kernel interface object to a member variable of the virtual interface object.

In the embodiments of the present disclosure, kernel interfaces of different containers may be isolated from each other or shared by each other. For example, in the multi-container Android^{®} system, the Android^{®} system may contain the binder file system, and the binder file systems of different containers are isolated from each other; and the Android^{®} system may not contain the binder file system, and ServiceManagers of different containers may be shared by each other, which is not particularly limited in the embodiments of the present disclosure.

In the embodiments of the present disclosure, the process may be an application process of any application program in the operating system, or a service process in the operating system, which is not particularly limited in the embodiments of the present disclosure.

In some embodiments, at operation S2, the application process in the second container communicates with a service process which is the target process in the first container by calling the virtual interface, so as to enable the application corresponding to the application process in the second container to call a service corresponding to the service process in the first container.

In the embodiments of the present disclosure, by associating the virtual interface in the second container with the first kernel interface in the first container and enabling the process in the second container to call the virtual interface, the process in the second container can access the first kernel interface in the first container, and thus can communicate with a process in the first container and call a corresponding service. In this way, inter-container penetration can be realized regardless of whether a component used for communication between different processes in the kernel can be shared. Moreover, there is no need to maintain specific request messages of various processes while realizing the inter-container penetration, which reduces difficulty in development and maintenance and improving practicability. In addition, according to the embodiments of the present disclosure, the inter-container penetration can be realized without changing a structure of the operating system of the containers, which can achieve high efficiency and is beneficial to ensuring safety of the operating system of the containers.

In the embodiments of the present disclosure, the virtual interface is an interface through which a process in the second container communicates with a process in the first container. The virtual interface may be an interface originally provided in the second container, e.g., a second file system interface in the second container; or the virtual interface may be an interface newly created in the second container, which is not particularly limited in the embodiments of the present disclosure.

Accordingly, in some embodiments, referring to FIG. 2, before the operation S1, the resource sharing method further includes the following operation S3 .

At operation S3, the virtual interface is created in the second container.

By newly creating the virtual interface in the second container, the second file system interface in the second container can be reserved, which avoids affecting a function based on the second file system interface and ensures compatibility.

In some embodiments, referring to FIG. 3, the operation S1 includes, but is not limited to, operation S11.

At operation S11, the first kernel interface is assigned to the virtual interface.

For example, the first kernel interface is an object, the virtual interface is also an object, and "assigning the first kernel interface to the virtual interface" refers to assigning the first kernel interface object to a member variable of the virtual interface obj ect.

In some embodiments, the resource sharing method further includes: acquiring the first kernel interface.

How to acquire the first kernel interface is not particularly limited in the embodiments of the present disclosure. In some embodiments, the first kernel interface may be directly extracted from the first container. In some embodiments, the first kernel interface is acquired according to an association relationship between a first file system interface and the first kernel interface in the first container.

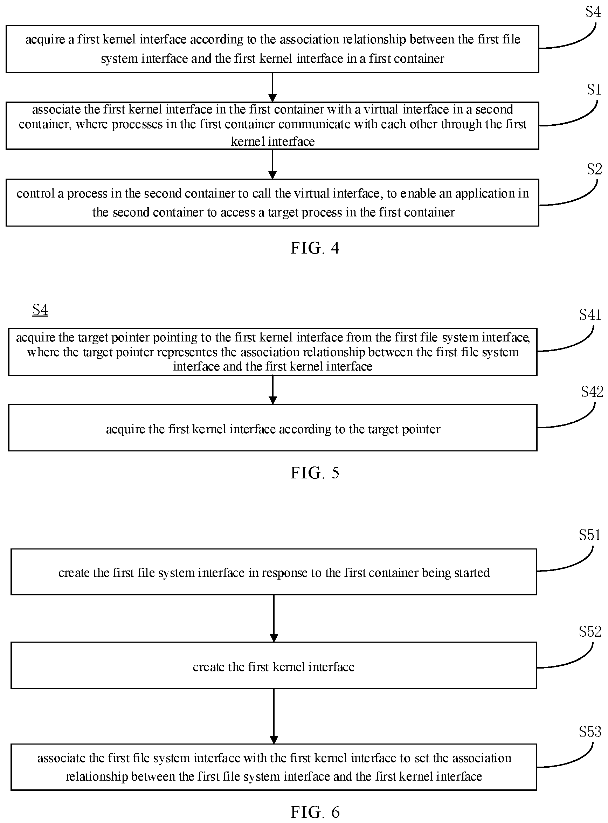

Accordingly, in some embodiments, referring to FIG. 4, before the operation S1, the resource sharing method further includes the following operation S4.

At operation S4, the first kernel interface is acquired according to the association relationship between the first file system interface and the first kernel interface in the first container, where a process in the first container accesses the first kernel interface through the first file system interface.

An form of the association relationship between the first file system interface and the first kernel interface is not particularly limited in the embodiments of the present disclosure. In some embodiments, a target pointer pointing to the first kernel interface from the first file system interface is configured to represent the association relationship between the first file system interface and the first kernel interface.

Accordingly, in some embodiments, referring to FIG. 5, the operation S4 includes, but is not limited to, the following operations S41 and S42.

At operation S41, the target pointer pointing to the first kernel interface from the first file system interface is acquired, where the target pointer represents the association relationship between the first file system interface and the first kernel interface.

At operation S42, the first kernel interface is acquired according to the target pointer.

In some embodiments, when the first container is started, the association relationship between the first file system interface and the first kernel interface is recorded in a procedure of creating the first file system interface and the first kernel interface.

Accordingly, in some embodiments, referring to FIG. 6, before the operation S4, the resource sharing method further includes the following operations S51 to S53.

At operation S51, the first file system interface is created in response to the first container being started.

At operation S52, the first kernel interface is created.

At operation S53, the first file system interface is associated with the first kernel interface to set the association relationship between the first file system interface and the first kernel interface.

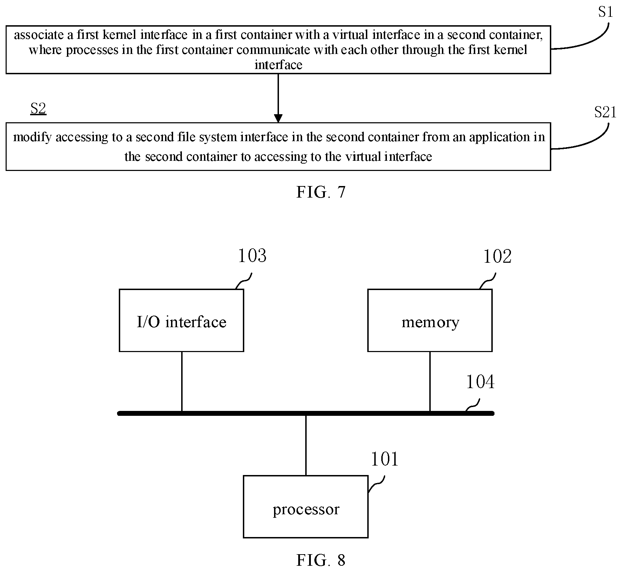

In some embodiments, referring to FIG. 7, the operation S2 includes the following operation S21.

At operation S21, accessing to a second file system interface in the second container from an application in the second container is modified to accessing to the virtual interface, where the process in the second container accesses a second kernel interface in the second container through the second file system interface.

In some embodiments, the first kernel interface and the second kernel interface are isolated from each other.

In a second aspect, referring to FIG. 8, an embodiment of the present disclosure provides a terminal, including: one or more processors 101; and a memory 102 having stored thereon one or more programs which, when executed by the one or more processors 101, cause the one or more processors 101 to perform the resource sharing method described above.

In addition, the terminal according to the embodiment of the present disclosure may further include one or more I/O interfaces 103 connected between the processors and the memory and configured to enable information interaction between the processors 101 and the memory 102.

The processor 101 is a device having data processing capability, and includes, but is not limited to, a Central Processing Unit (CPU). The memory 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH). The I/O interface (read/write interface) 103 is connected between the processor 101 and the memory 102, is capable of enabling the information interaction between the processor 101 and the memory 102, and includes, but is not limited to, a data bus (Bus).

In some embodiments, the processor 101, the memory 102, and the I/O interface 103 are connected to each other through a bus 104, and then are connected to other components of a computing device.

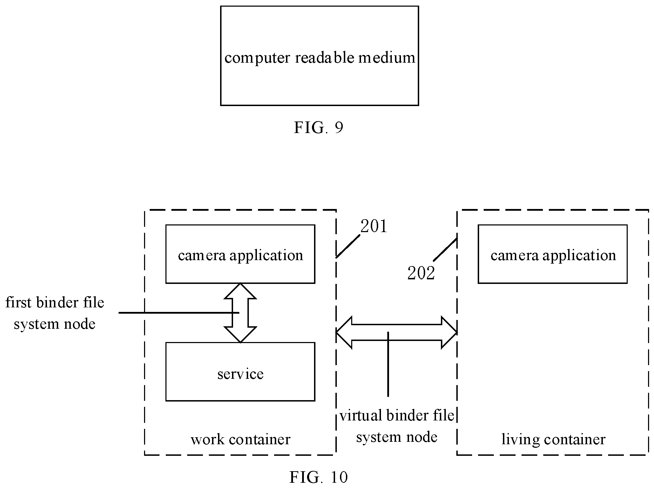

In a third aspect, referring to FIG. 9, an embodiment of the present disclosure provides a computer readable medium having stored thereon a computer program which, when executed by a processor, implements the resource sharing method described above.

In order to enable those of ordinary skill in the art to understand the technical solutions provided in the embodiments of the present disclosure more clearly, the technical solutions provided in the embodiments of the present disclosure are illustrated in detail below by specific embodiments.

### Embodiment One

In the present embodiment, a first container and a second container are sequentially started, and an operating system of the first container and the second container may be any operating system. It should be noted that "a first container and a second container are sequentially started" in the present embodiment is merely for illustration, and a starting order of the first container and the second container in a specific implementation procedure is not particularly limited herein.

A first file system interface is created when the first container is started, and the first file system interface is an interface to be accessed when performing inter-process communication within the first container.

A first kernel interface is created when the first container is started, and the first kernel interface is a driving component for implementing communication between the processes in the kernel, that is, all inter-process communication functions of the operating system are implemented in this driving component.

The first file system interface in the first container is associated with the first kernel interface in the first container. "Associating the first file system interface with the first kernel interface" refers to associating a first file system interface object with a first kernel interface object, for example, assigning the first kernel interface object to a member variable in a structure of the first file system interface object. After the association, the inter-process communication of the processes within the first container may be realized. For example, accessing to a camera service in the first container from a camera application in the first container may be achieved by calling the first file system interface.

A virtual interface is created when the second container is started, and the virtual interface is an external interface for achieving inter-process communication between processes in the second container and processes in the first container.

The virtual interface in the second container is associated with the first kernel interface in the first container. "Associating the virtual interface with the first kernel interface" refers to associating a virtual interface object with the first kernel interface object, for example, assigning the first kernel interface object to a member variable in a structure of the virtual interface object.

An application in the second container may directly access a corresponding service in the first container by calling the virtual interface. For example, a camera application in the second container may directly access the camera service in the first container by calling the virtual interface.

In the following Embodiment Two and Embodiment Three, a description is given by taking a terminal having a dual-container Android^{®} system as an example. A work container is the first container in the embodiments of the present disclosure, and a living container is the second container in the embodiments of the present disclosure; a binder file system node is the file system interface in the embodiments of the present disclosure, a binder entity device node is the kernel interface in the embodiments of the present disclosure, and a virtual binder file system node is the virtual interface in the embodiments of the present disclosure.

It should be noted that a description of some specific application scenarios in the embodiments of the present disclosure is given in the following Embodiment Two and Embodiment Three, and is merely used to explain the embodiments of the present disclosure, rather than limiting the embodiments of the present disclosure.

### Embodiment Two

When the work container is started, a first binder file system is created, and a pointer, which points to a first binder entity device node, of a first binder file system node in the first binder file system is recorded.

When the living container is started, a second binder file system is created, and a virtual binder file system node is created and is named "binder_home_to_work"; and the pointer, which points to the first binder entity device node, of the first binder file system node in the first binder file system is assigned to the virtual binder file system node.

When an application program in the living container needs to access a service in the work container, originally accessing to a second binder file system node "open/dev/binderfs/hwbinder" from the an application process in the living container is modified to accessing to the virtual binder file system node "open/dev/binderfs/binder_home_to_work".

In the present embodiment, even if there is the binder file system in the Android^{®} system such that binders are completely isolated, penetration of the binders may be realized; and when the penetration of the binders is realized, there is no need to understand specific detailed flow of a service, and merely a called interface needs to be modified, which improves convenience and safety and ensures system compatibility.

### Embodiment Three

FIG. 10 is a schematic diagram of architecture for inter-container penetration according to an embodiment of the present embodiment. In the present embodiment, a work container 201 and a living container 202 may be sequentially started.

When the work container 201 is started, a first binder file system node is created and is recorded as "/dev/binderfs/hwbinder", and the first binder file system node is an interface to be accessed when performing inter-process communication within the work container 201.

A first binder entity device node is created in the work container 201, and is recorded as "hwbinder_node", and the first binder entity device node is a driving component for implementing inter-process communication in a kernel, that is, all inter-process communication functions of the operating system are implemented in this driving component.

The first binder file system node "/dev/binderfs/hwbinder" in the work container 201 is associated with the first binder entity device node "hwbinder_node" in the work container 201. "Associating the first binder file system node with the first binder entity device node" refers to associating a first binder file system node object with a first binder entity device node object, for example, assigning the first binder entity device node object "hwbinder_node" to a member variable in a structure of the first binder file system node object "/dev/binderfs/hwbinder". After the association, the inter-process communication of processes in the work container 201 can be realized. For example, accessing to a service *"camera provider"* in the work container 201 from a camera application in the work container 201 may be achieved by calling the first binder file system node "open/dev/binderfs/hwbinder".

A virtual binder file system node is created when the living container 202 is started, and is recorded as "/dev/binderfs/hwbinder_home_to_work". The virtual binder file system node is an external interface for achieving inter-process communication between processes in the living container 202 and processes in the work container 201.

The virtual binder file system node "/dev/binderfs/hwbinder_home_to_work" in the living container 202 is associated with the first binder entity device node "hwbinder_node" in the work container 201. "Associating the virtual binder file system node with the first binder entity device node" refers to associating a virtual binder file system node object with the first binder entity device node object, for example, assigning the first binder entity device node object "hwbinder_node" to a member variable in a structure of the virtual binder file system node object "/dev/binderfs/hwbinder_home_to_work".

In this way, a camera application (or any other applicable application) in the living container 202 can directly access a corresponding service (e.g., the service *"camera provider "*) in the work container 201 by calling "open/dev/binderfs/hwbinder_home_to_work".

It should be understood by those of ordinary skill in the art that the functional modules/units in all or some of the operations, the systems, and the devices in the method disclosed above may be implemented as software, firmware, hardware, or suitable combinations thereof. In an implementation manner of hardware, division between the functional modules/units stated above is not necessarily corresponding to division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, a Read-Only Memory (ROM), an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the example implementations by using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A resource sharing method, comprising:
associating a first kernel interface in a first container with a virtual interface in a second container, wherein processes in the first container communicate with each other through the first kernel interface; and
controlling a process in the second container to call the virtual interface, to enable an application in the second container to access a target process in the first container.

2. The resource sharing method of claim 1, wherein before associating the first kernel interface in the first container with the virtual interface in the second container, the resource sharing method further comprises:
creating the virtual interface in the second container.

3. The resource sharing method of claim 1 or 2, wherein associating the first kernel interface in the first container with the virtual interface in the second container comprises:
assigning the first kernel interface to the virtual interface.

4. The resource sharing method of claim 1 or 2, wherein before associating the first kernel interface in the first container with the virtual interface in the second container, the resource sharing method further comprises:
acquiring the first kernel interface according to an association relationship between a first file system interface and the first kernel interface in the first container, wherein a process in the first container accesses the first kernel interface through the first file system interface.

5. The resource sharing method of claim 4, wherein acquiring the first kernel interface according to the association relationship between the first file system interface and the first kernel interface in the first container comprises:
acquiring a target pointer pointing to the first kernel interface from the first file system interface, wherein the target pointer represents the association relationship between the first file system interface and the first kernel interface; and
acquiring the first kernel interface according to the target pointer.

6. The resource sharing method of claim 4, wherein before acquiring the first kernel interface according to the association relationship between the first file system interface and the first kernel interface in the first container, the resource sharing method further comprises:
creating the first file system interface in response to the first container being started;
creating the first kernel interface; and
associating the first file system interface with the first kernel interface to set the association relationship between the first file system interface and the first kernel interface.

7. The resource sharing method of claim 1 or 2, wherein controlling the process in the second container to call the virtual interface comprises:
modifying accessing to a second file system interface in the second container from the application in the second container to accessing to the virtual interface, wherein the process in the second container accesses a second kernel interface in the second container through the second file system interface.

8. The resource sharing method of claim 7, wherein the first kernel interface and the second kernel interface are isolated from each other.

9. A terminal, comprising:
one or more processors; and
a memory having stored thereon one or more programs which, when executed by the one or more processors, cause the one or more processors to perform the resource sharing method of any one of claims 1 to 8.

10. A computer readable medium having stored thereon a computer program which, when executed by a processor, implements the resource sharing method of any one of claims 1 to 8.
